# EUROPEAN PATENT SPECIFICATION

(11) **EP 3 968 711 B1**
(45) Date of publication and mention of the grant of the patent: **23.09.2026**
(21) Application number: 19928207.0
(22) Date of filing: 09.05.2019
(51) Int. Cl.: H04W 72/04, H04W 72/12, H04L 5/00

(54) **USER TERMINAL AND WIRELESS COMMUNICATION METHOD**
BENUTZERENDGERÄT UND DRAHTLOSKOMMUNIKATIONSVERFAHREN
TERMINAL UTILISATEUR ET PROCÉDÉ DE COMMUNICATION SANS FIL

(43) Date of publication of application: 16.03.2022
(73) Proprietor: NTT DOCOMO, INC., Chiyoda-Ku Tokyo 100-6150 (JP)
(72) Inventor: YOSHIOKA, Shohei, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2019/018598
(87) International publication number: WO 2020/225913

(56) References cited:
- EP-A1- 3 910 851
- WO-A1-2018/025949
- LG ELECTRONICS: "PUSCH enhancements for NR URLLC", 3GPP TSG RAN WG1 #97 R1-1906666, 4 May 2019 (2019-05-04), pages 1 - 13, XP051708702
- SHARP: "PUSCH enhancements for NR URLLC", 3GPP TSG RAN WG1 MEETING #97 R1-1907221, 3 May 2019 (2019-05-03), pages 1 - 9, XP051709247
- HUAWEI ET AL.: "Frequency hopping for PUSCH enhancements", 3GPP TSG RAN WG1 MEETING #97 R1- 1907550, 4 May 2019 (2019-05-04), pages 1 - 2, XP051709565

## Description

### Technical Field

The present disclosure relates to a user terminal and a radio communication method in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

LG ELECTRONICS: "PUSCH enhancements for NR URLLC", 3GPP DRAFT; R1 -1906666 PUSCH ENHANCEMENTS FOR NR URLLC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20190513 - 20190517 4 May 2019 (2019-05-04), describes that segmentation may lead to a repetition with too short duration such as one or two symbols. Considering DMRS symbol occupies at least one symbol, one symbol segment needs to be handled.

EP 3 910 851 A1 (prior art under Art. 54(3) EPC) describes a PUSCH transmission method. When one PUSCH repetition exceeds a slot boundary, the corresponding PUSCH repetition is divided with reference to the slot boundary.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems, it is studied that a user terminal (UE: User Equipment) transmits at least one of certain channel and signal (channel/signal) at a certain transmission occasion (also referred to as period, occasion, repetition, or the like), crossing a slot boundary (over a plurality of slots).

The channel/signal may be, for example, an uplink shared channel (for example, Physical Uplink Shared Channel (PUSCH)) or a downlink shared channel (for example, Physical Downlink Shared Channel (PDSCH)).

However, in a case that a signal/channel at a certain transmission occasion is transmitted over a plurality of slots, how to control a configuration of a demodulation reference signal (DMRS) (DMRS configuration) for the signal/channel is a problem.

Thus, an object of the present disclosure is to provide a user terminal and a radio communication method capable of appropriately controlling a DMRS configuration of a signal/channel at a certain transmission occasion.

### Solution to Problem

The present invention is defined in the appended independent claims. Further preferred embodiments are defined in the dependent claim.

A user terminal according to an aspect of the present disclosure includes a transmitting section that transmits an uplink shared channel at a certain transmission occasion over a plurality of slots being consecutive, and a control section that controls a configuration of a demodulation reference signal for the uplink shared channel.

### Advantageous Effects of Invention

According to an aspect of the present disclosure, it is possible to appropriately control a DMRS configuration of a signal/channel at a certain transmission occasion.

### Brief Description of Drawings

FIG. 1 is a diagram to show an example of multi-segment transmission;
FIGS. 2A to 2F are diagrams to show examples of mapping of a type A DMRS;
FIGS. 3A to 3F are diagrams to show examples of mapping of a type B DMRS;
FIGS. 4A and 4B are diagrams to show examples of PUSCH repetition transmission in N consecutive mini-slots;
FIGS. 5A and 5B are diagrams to show examples of a DMRS configuration for multi-segment transmission according to a first aspect;
FIGS. 6A to 6C diagrams to show examples of a DMRS configuration for multi-segment transmission according to a modification example of the first aspect;
FIGS. 7A and 7B are diagrams to show other examples of the DMRS configuration for multi-segment transmission according to the modification example of the first aspect;
FIGS. 8A and 8B are diagrams to show examples of a DMRS configuration for multi-segment transmission according to a second aspect;
FIG. 9 is a diagram to show an example of the DMRS configuration for multi-segment transmission according to the second aspect;
FIGS. 10A to 10C are diagrams to show examples of the DMRS configuration for multi-segment transmission according to the second aspect;
FIG. 11 is a diagram to show an example of a schematic structure of a radio communication system according to one embodiment;
FIG. 12 is a diagram to show an example of a structure of a base station according to one embodiment;
FIG. 13 is a diagram to show an example of a structure of a user terminal according to one embodiment; and
FIG. 14 is a diagram to show an example of a hardware structure of the base station and the user terminal according to one embodiment.

### Description of Embodiments

### (Multi-segment Transmission)

For NR (for example, 3GPP Rel. 15), it is studied that a user terminal (User Equipment (UE)) allocates time domain resources (for example, a certain number of symbols) within a single slot to an uplink shared channel (for example, Physical Uplink Shared Channel (PUSCH)) or a downlink shared channel (for example, Physical Downlink Shared Channel (PDSCH)) at a transmission occasion (also referred to as period, occasion, or the like).

For example, the UE may use, at a transmission occasion, a PUSCH allocated to a certain number of consecutive symbols within a slot to transmit one or a plurality of transport blocks (TBs). The UE may use, at a transmission occasion, a PDSCH allocated to a certain number of consecutive symbols within a slot to transmit one or a plurality of TBs.

On the other hand, in NR (for example, Rel.16 or later versions), a time domain resource (for example, a certain number of symbols) is assumed to be allocated to a PUSCH or PDSCH at a transmission occasion, crossing a slot boundary (over a plurality of slots).

Transmission of at least one of a channel and a signal (channel/signal) in uplink (UL) or downlink (DL) using the time domain resource that is allocated at a transmission occasion crossing the slot boundary (over a plurality of slots) is also referred to as multi-segment transmission, two-segment transmission, cross slot boundary transmission, discontinuous transmission, multi-segmented transmission, or the like. Similarly, reception of the channel/signal in UL or DL crossing the slot boundary is also referred to as multi-segment reception, two-segment reception, cross slot boundary reception, discontinuous reception, multi-segmented reception, or the like.

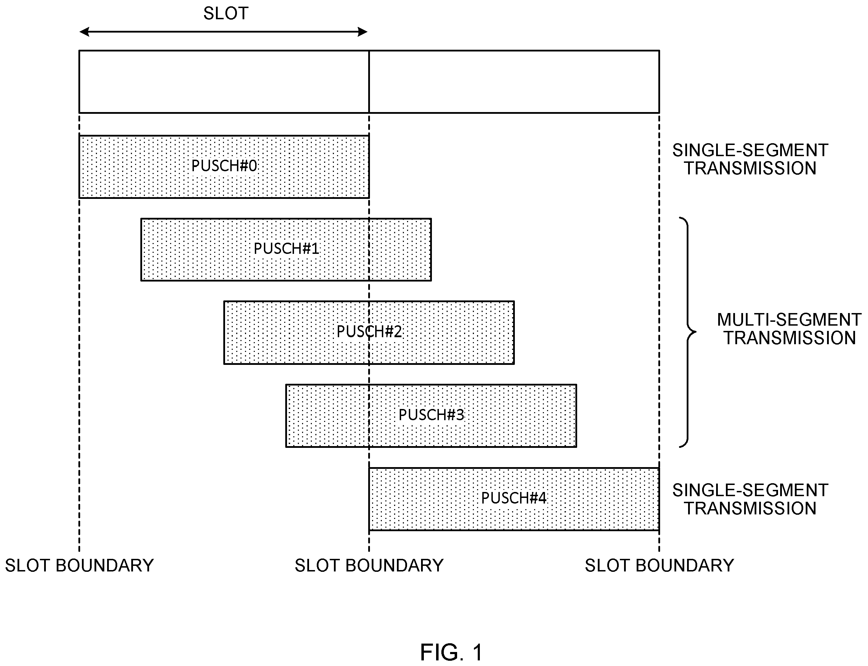

FIG. 1 is a diagram to show an example of the multi-segment transmission. Note that although a multi-segment transmission of PUSCH is shown in FIG. 1, multi-segment transmission is certainly applicable to other signals/channels (for example, PDSCH and the like).

In FIG. 1, the UE may control transmission of PUSCH allocated within one slot or over a plurality of slots based on a certain number of segments. Specifically, in a case that a time domain resource over one or more slots is allocated to the PUSCH at a transmission occasion, the UE may map each segment to a certain number of allocation symbols within a corresponding slot.

Here, a "segment" may be a certain number of symbols within each slot allocated to one transmission occasion or data transmitted in the certain number of symbols. For example, a symbol at the beginning of a PUSCH allocated at one transmission occasion is in a first slot and a symbol at the end of the PUSCH is in a second slot, one or more symbols included in the first slot and one or more symbols included in the second slot for the PUSCH may be a first segment and a second segment, respectively.

Note that a "segment" is a certain data unit, and may be at least part of one or a plurality of TBs. For example, each segment may include one or a plurality of TBs, one or a plurality of code blocks (CBs), or one or a plurality of code block groups (CBGs). Note that one CB is a unit for coding a TB, and may be obtained by segmenting TB into one or more (CB segmentation). One CBG may include a certain number of CBs.

A size of each segment (the number of bits) may be determined based on, for example, at least one of the number of slots to which a PUSCH is allocated, the number of allocation symbols in each slot, and a ratio of the number of allocation symbols in each slot. The number of segments may be determined based on the number of slots to which a PUSCH is allocated.

For example, each of PUSCHs #0 and #4 is allocated within a certain number of consecutive symbols within a single slot. In this case, the UE may map a single segment to the allocation symbol within the single slot. The single segment may include, for example, one or a plurality of TBs. Such a transmission in a single segment within a single slot may be referred to as a single-segment transmission, a one-segment transmission, a non-segmented transmission, or the like.

On the other hand, each of PUSCHs #1, #2, and #3 is allocated to a certain number of consecutive symbols over a plurality of slots (here, two slots) crossing the slot boundary. In this case, the UE may map a plurality of segments (for example, two segments) to allocation symbols within a plurality of different slots. Each segment may include, for example, one or a plurality of data units obtained dividing a TB such as one TB, a certain number of CBs, or a certain number of CBGs.

Such a transmission of a plurality of segments over a plurality of slots may be referred to as a multi-segment transmission, a two-segment transmission, a cross slot boundary transmission, or the like. Note that each slot may correspond to one segment, or a plurality of segments.

### (DMRS Configuration)

In NR, plurality of types of demodulation reference signals (DMRS) for PUSCH or PDSCH may be supported concerning the time domain. Specifically, as the time domain structure of a DMRS for PUSCH or PDSCH, a plurality of types (for example, types A and B) different in a position of an initial symbol for DMRS (DMRS symbol) may be supported.

In type A (also referred to a mapping type A, a first type, or the like), a DMRS may be mapped relative to start of the slot (slot boundary) regardless of where within the slot data transmission is started.

Specifically, in type A, a position l₀ of the initial DMRS symbol may be indicated by a position relative to a reference point l that is the start of the slot. The position l₀ may be provided through a higher layer parameter (for example, "dmrs-TypeA-Position" of a Radio Resource Control (RRC) information element (IE)). The position l₀ may be 2 or 3, for example. Note that the RRC IE may be interpreted as an RRC parameter or the like.

On the other hand, in type B (also referred to as a mapping type B, a second type, or the like), a DMRS may be mapped based on the symbol where the data transmission is started within a slot. In type B, the position l₀ of the initial DMRS symbol may be indicated by a position relative to start (initial symbol) of a time domain resource allocated to a PDSCH or a PUSCH. The position l₀ may be 0, for example.

Which is applied type A or B may be determined depending on at least one of the higher layer parameter and downlink control information (DCI).

In any case of types A and B, a certain number of additional DMRS symbols may be provided within a slot besides the initial DMRS symbol described above. For example, a certain number of (for example, up to three) additional DMRS symbols may be added within a slot to the initial DMRS symbol described above.

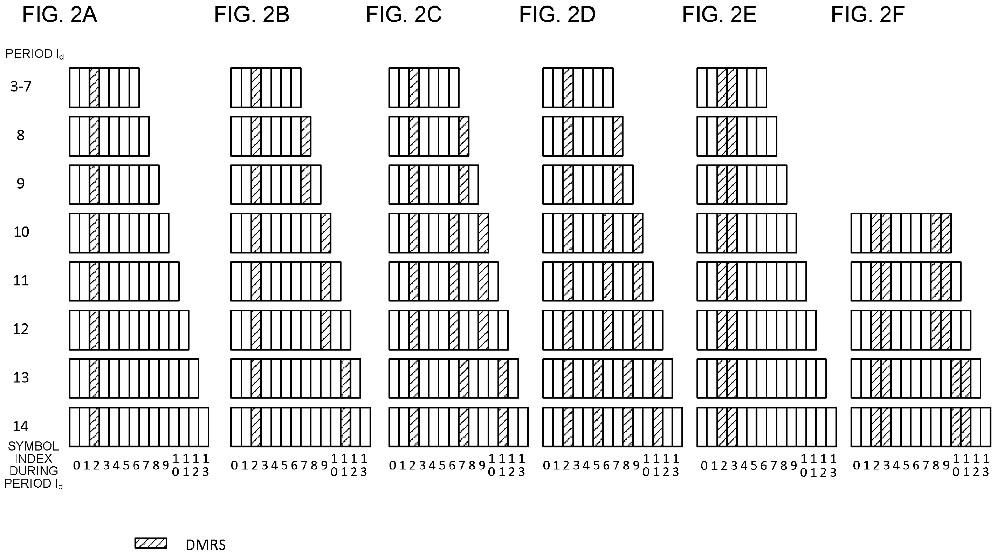

FIGS. 2A to 2F are diagrams to show examples of mapping of a type A DMRS. In the case of type A, a certain period l_{d} may be a period (the number of symbols) between an initial symbol within a slot and the last symbol of a time domain resource within the slot allocated to (scheduled for) a PDSCH or a PUSCH. Note that although not shown in the figure, in a case that frequency hopping is applied, the certain period l_{d} may be a period per hop.

FIGS. 2A to 2D show arrangement examples of a single symbol DMRS per certain period l_{d}. As shown in FIGS. 2A to 2D, a DMRS may be arranged within a slot to at least the initial symbol l₀ (here, l₀ = 2) that is determined based on the higher layer parameter (for example, the RRC IE "dmrs-TypeA-Position"). As shown in FIGS. 2B to 2D, a certain number of additional DMRS symbols may be provided per certain period l_{d}. At least one of the number of additional DMRS symbols and the positions of the additional DMRS symbols may be predefined by a specification.

The higher layer parameter (for example, an RRC IE "dmrs-AdditionalPosition") may indicate an arrangement pattern of the DMRS. For example, values "0 (pos0)," "1 (pos1)," "2 (pos2)," and "3 (pos3)" of the higher layer parameter may be associated with (or may indicate) the arrangement patterns per certain period l_{d} in FIGS. 2A, 2B, 2C, and 2D, respectively. The UE may determine a mapping position of a type A DMRS (also referred to as a DMRS position or the like), based on the arrangement pattern and the certain period l_{d} indicated by the higher layer parameter.

FIGS. 2E to 2F show arrangement examples of a double symbol DMRS per certain period l_{d}. As shown in FIGS. 2E to 2F, a DMRS may be arranged within a slot to at least a set of the initial DMRS symbol l₀ (here, l₀ = 2) and the next symbol l₀ + 1, the initial DMRS symbol l₀ being determined based on the higher layer parameter (for example, the RRC IE "dmrs-TypeA-Position"). As shown in FIG. 2F, a certain number of sets of additional DMRS symbols (two consecutive DMRS symbols) may be provided per certain period l_{d}. At least one of the number sets of additional DMRS symbols or the positions of the sets of additional DMRS symbols may be predefined by a specification.

The higher layer parameter (for example, an RRC IE "dmrs-AdditionalPosition") may indicate an arrangement pattern of the DMRS. For example, values "0 (pos0)" and "1 (pos1)" of the higher layer parameter may be associated with the arrangement patterns in FIGS. 2E and 2F, respectively. The UE may determine a mapping position of a type A DMRS (also referred to as a DMRS position or the like), based on the arrangement pattern and the certain period l_{d} indicated by the higher layer parameter.

The UE may determine which to apply the single symbol DMRS or the double symbol DMRS, based on the higher layer parameter (for example, an RRC IE "maxLength" in "DMRS-DownlinkConfig" or "DMRS-UplinkConfig").

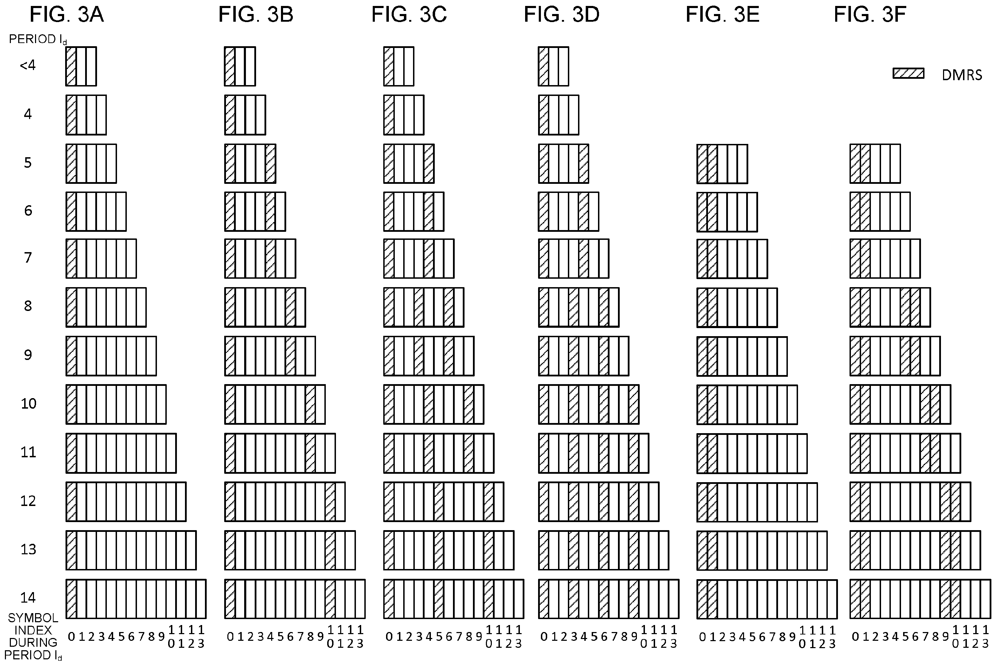

FIGS. 3A to 3F are diagrams to show examples of mapping of a type B DMRS. As shown in FIGS. 3A to 3F, in the case of type B, the certain period l_{d} may be a period (the number of symbols) scheduled for a PUSCH or a PDSCH. Although not shown in the figure, in the case that frequency hopping is applied, the certain period l_{d} may be a period per hop.

Note that in type B, in a case of a PDSCH, some of the periods l_{d} shown in FIGS. 3A to 3F (for example, two, four, or seven symbols for a normal cyclic prefix, and two, four, or six symbols for an extended cyclic prefix) may be supported.

FIGS. 3A to 3D show arrangement examples of a single symbol DMRS per certain period l_{d}. In FIGS. 3A to 3D, a DMRS may be arranged within a slot to at least an initial symbol scheduled for a PUSCH or a PDSCH. As shown in FIGS. 3B to 3D, additional DMRS symbols may be provided per certain period l_{d}. At least one of the number of additional DMRS symbols and the positions of the additional DMRS symbols may be predefined by a specification.

The higher layer parameter (for example, an RRC IE "dmrs-AdditionalPosition") may indicate an arrangement pattern of the DMRS. For example, values "0 (pos0)," "1 (pos1)," "2 (pos2)," and "3 (pos3)" of the higher layer parameter may be associated with (or may indicate) the arrangement patterns per certain period l_{d} in FIGS. 3A, 3B, 3C, and 3D, respectively. The UE may determine a mapping position of a type B DMRS (also referred to as a DMRS position or the like), based on the arrangement pattern and the certain period l_{d} indicated by the higher layer parameter.

FIGS. 3E to 3F show arrangement examples of a double symbol DMRS per certain period l_{d}. As shown in FIGS. 3E to 3F, a DMRS may be arranged within a slot to at least a set of the initial symbol and the next symbol, the initial symbol being scheduled for a PUSCH or a PDSCH. As shown in FIG. 3F, sets of additional DMRS symbols (two consecutive DMRS symbols) may be provided per certain period l_{d}. At least one of the number sets of additional DMRS symbols or the positions of the sets of additional DMRS symbols may be predefined by a specification.

The higher layer parameter (for example, an RRC IE "dmrs-AdditionalPosition") may indicate an arrangement pattern of the DMRS. For example, values "0 (pos0)" and "1 (pos1)" of the higher layer parameter may be associated with the arrangement patterns in FIGS. 3E and 3F, respectively. The UE may determine a mapping position of a type B DMRS (also referred to as a DMRS position or the like), based on the arrangement pattern and the certain period l_{d} indicated by the higher layer parameter.

The UE may determine which to apply the single symbol DMRS or the double symbol DMRS, based on the higher layer parameter (for example, an RRC IE "maxLength" in "DMRS-DownlinkConfig" or "DMRS-UplinkConfig").

In NR, a plurality of types of DMRS for PUSCH or PDSCH may be supported for at least one of a frequency domain and a code domain. For example, a plurality of types (for example, types 1 and 2) different in at least one of the mapping position in the frequency domain and the maximum number of orthogonal codes may be supported.

For example, in type 1, up to four orthogonal signals may be provided in the case of the single symbol DMRS described above (for example, see FIGS. 2A to 2D, FIGS. 3A to 3D), and up to eight orthogonal signals may be provided in the case of the double symbol DMRS described above (for example, see FIGS. 2E, 2F, 3E, and 3F). On the other hand, in type 2, up to six orthogonal signals may be provided in the case of the single symbol DMRS described above, and up to 12 orthogonal signals may be provided in the case of the double symbol DMRS described above.

### (Repetition Transmission)

For NR, a study is underway to transmit a PUSCH or PDSCH not only one time, but also repeatedly a plurality of times (with repetition). Specifically, for NR, a study is underway to transmit a TB based on the same data at one or more transmission occasions. Each transmission occasion is within a certain time unit, and the TB may be transmitted N times in N consecutive slots. Note that the number of repetitions of one may indicate that a PUSCH or a PDSCH is transmitted one time (no repetition).

The certain time unit may be a slot, for example, or a time unit shorter than a slot (for example, a mini-slot). The mini-slot may include seven symbols, three or four symbols, or two symbols. The mini-slot may be referred to as a sub-slot or a half-slot.

The repetition transmission may be referred to as a slot-aggregation transmission, a multi-slot transmission, or the like. The number N of repetitions (the number of aggregations, an aggregation factor) may be specified for the UE through at least one of the higher layer parameter (for example, an RRC IE "pusch-AggregationFactor" or "pdsch-AggregationFactor") and the DCI. A transmission occasion, a repetition, a slot, a mini-slot, and the like may be interpreted with each other.

The same symbol allocation may be applied to N consecutive time units (for example, slots or mini-slots). For example, the UE may determine symbol allocation in each time unit, based on a start symbol S and the number L of symbols determined based on a value m of a certain field (for example, a time domain resource allocation (TDRA) field) in the DCI.

On the other hand, a redundancy version (RV) applied to the TB based on the same data may be the same or different in at least a part between the N consecutive time units. For example, an RV applied to the TB in the n-th time unit may be determined based on a value of a certain field (for example, an RV field) in the DCI.

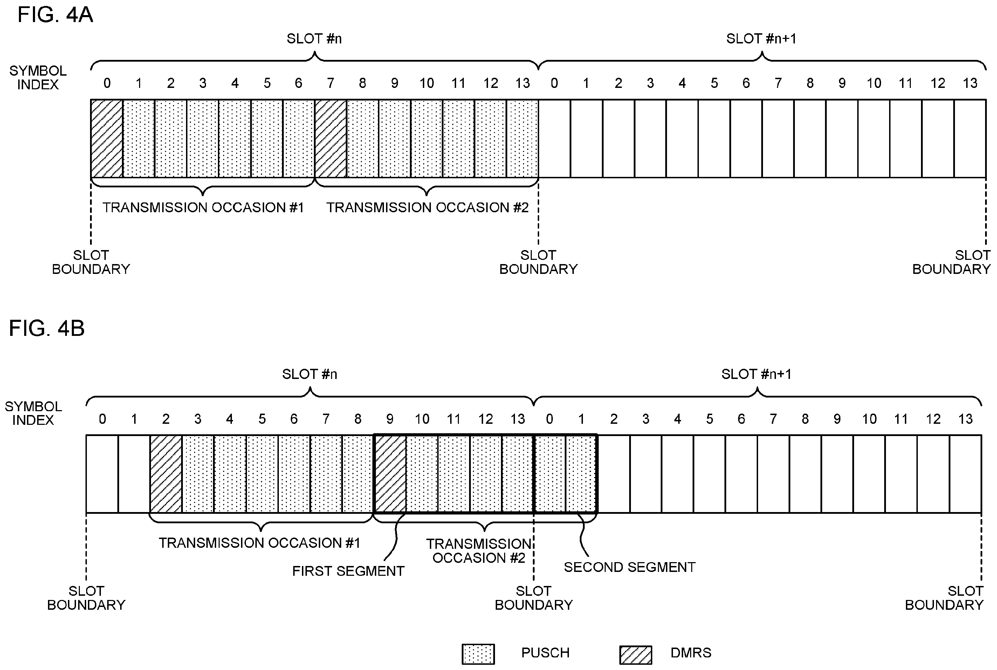

FIGS. 4A and 4B are diagrams to show examples of PUSCH repetition transmission in N consecutive mini-slots. FIGS. 4A and 4B show the examples of the number N of repetitions of N = 2, but N may be 2 or more without limitation. In FIGS. 4A and 4B, each transmission occasion includes a mini-slot of seven symbols, without limitation.

As shown in FIG. 4A, in a case that one repetition (also referred to as one nominal repetition or the like) is within a single slot or a UL period, the UE can demodulate the PUSCH, based on the DMRS arranged in a certain symbol within each mini-slot (here, an initial symbol).

On the other hand, as shown in FIG. 4B, in a case that the one repetition is over a plurality of slots (crosses a slot boundary), the multi-segment transmission is assumed to be applied. For example, in FIG. 4B, transmission occasion #2 is multi-segment transmission over slots #n and #n + 1. Transmission occasion #2 includes the first segment including symbols #9 to #13 in slot #n and the second segment including symbols #0 and #1 in slot #n + 1.

As shown in FIG. 4B, a DMRS is arranged in the first segment at transmission occasion #2, but not arranged in the second segment. In this case, a receiving process (for example, at least one of demodulation and decoding) of the PUSCH in the second segment in which a DMRS is not arranged may not be appropriately controlled. A similar problem may occur, not only for the PUSCH, in a case of multi-segment transmission of other signals/channels such as PDSCH and the like.

As such, the inventors of the present invention came up with the idea of appropriately controlling the receiving process of the signal/channel by appropriately controlling the DMRS configuration of the signal/channel in a case of transmitting signal/channel at a certain transmission occasion over a plurality of slots (in a case of multi-segment transmission).

Hereinafter, embodiments according to the present disclosure will be described in detail with reference to the drawings. Note that hereinafter, a description is given of the DMRS configuration of the PUSCH, but can be adequately applied to DMRS configuration of other UL or DL signals/channels.

In the present embodiment, the DMRS configuration may be include at least one of the followings:
- a DMRS type in the time domain (for example, type A or type B described above),
- a DMRS type in at least one of the frequency domain and the code domain (for example, type 1 or type 2 described above),
- the number of consecutive DMRS symbols (for example, the single symbol DMRS or the double symbol DMRS described above), and
- an arrangement pattern of the DMRS per certain period l_{d} (for example, the RRC IE "dmrs-AdditionalPosition"), where the arrangement pattern may include the position of the initial DMRS symbol (or a set or the initial DMRS symbols), and at least one of presence or absence and the position of the additional DMRS symbol (or a set of additional DMRS symbols).

### (First Aspect)

In a first aspect, the DMRS configuration for multi-segment transmission may be maintained similar to the DMRS configuration for single segment transmission. In other words, even in the case of multi-segment transmission, the DMRS configuration may be controlled not in units of segment, but in units of one transmission occasion (entire one PUSCH).

In the first aspect, in a case that a single PUSCH (a PUSCH at a transmission occasion or PUSCH in a repetition) includes the first and second segments belonging to different slots, a DMRS arranged to any one of the first and second segments may be permitted to be used for the other segment. In other words, interpolation of channel estimation between different slots may be permitted.

The same transmit power may be ensured for the first and second segments.

Phase continuity may be ensured for different slots to which the first and second segments belong. Even if two symbols correspond to different slots, the channel over which a symbol on the antenna port used for uplink transmission is conveyed may be inferred from the channel over which another symbol on the same port is conveyed.

Note that the phase continuity may be ensured for different slots to which the first and second segments belong in a case that a DMRS is arranged in any one of the first and second segments and a DMRS is not arranged the other segment. Alternatively, the phase continuity may be ensured for different slots to which the first and second segments belong in a case that a DMRS is arranged in each of the first and second segments.

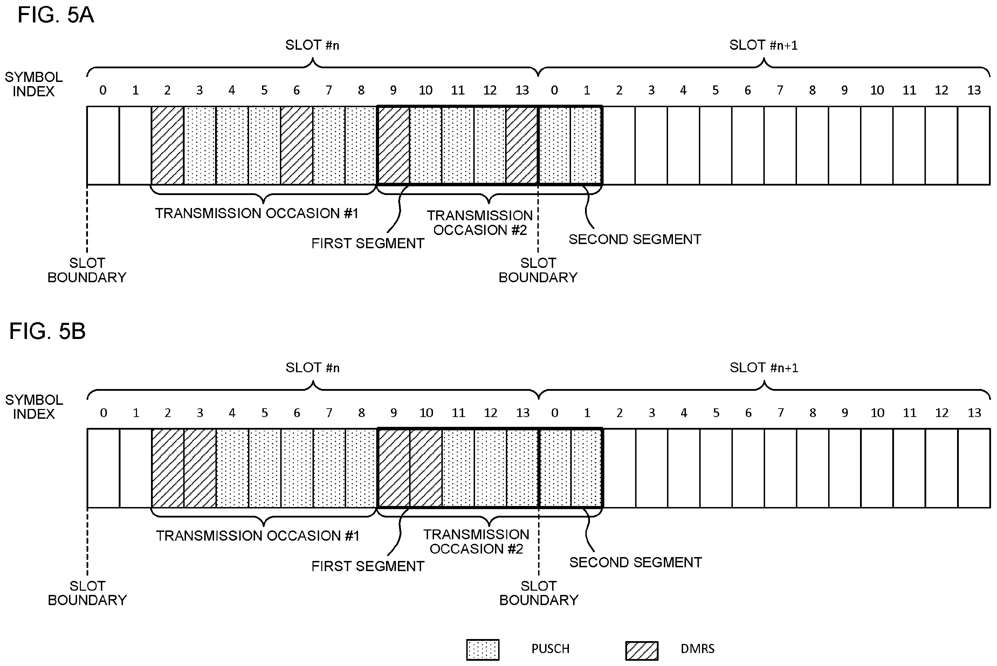

FIGS. 5A and 5B are diagrams to show examples of the DMRS configuration for multi-segment transmission according to the first aspect. FIGS. 5A and 5B show the examples of the number N of repetitions of N = 2, but N may be 2 or more without limitation. In FIGS. 5A and 5B, each transmission occasion includes a mini-slot of seven symbols, without limitation.

In FIGS. 5A and 5B, type B (for example, see FIGS. 3A to 3F) is applied as the time domain structure of a DMRS, but type A may be applied without limitation. The period l_{d} scheduled for a PUSCH includes seven symbols, without limitation.

FIG. 5A shows an arrangement example of the single symbol DMRS. For example, in FIG. 5A, any one of "2," "3," and "4" is specified through the higher layer parameter (for example, the RRC IE "dmrs-AdditionalPosition"). In this case, a DMRS may be arranged in an initial symbol and the fourth symbol in each transmission occasion (for example, see the arrangement of a DMRS in the period l_{d} of seven symbols in FIG. 3B to 3D).

As shown in FIG. 5A, the PUSCH at transmission occasion #2 (PUSCH for the second time) may include the first segment belonging to slot #n and the second segment belonging to slot #n + 1. As shown in FIG. 5A, a DMRS is not arranged in the second segment. In this case, the receiving process of the second segment (for example, demodulation or the like) may be performed based on a DMRS arranged in two symbols in the first segment (here, symbols #9 and #13 in slot #n).

FIG. 5B shows an arrangement example of the double symbol DMRS. For example, in FIG. 5B, any one of "0" and "1" is specified through the higher layer parameter (for example, the RRC IE "dmrs-AdditionalPosition"). In this case, a DMRS may be arranged in an initial symbol and the next symbol in each transmission occasion (for example, see the arrangement of a DMRS in the period l_{d} of seven symbols in FIGS. 3E to 3F).

As shown in FIG. 5B, a DMRS is not arranged the second segment in a PUSCH at transmission occasion #2 (PUSCH for the second time). In this case, the receiving process of the second segment (for example, demodulation or the like) may be performed based on a DMRS arranged in two symbols in the first segment (here, symbols #9 and #10 in slot #n).

In this way, the phase continuity may be ensured for different slots #n and #n + 1. With this configuration, in the case that a PUSCH at a certain transmission occasion is over slots #n and #n + 1, even if a DMRS is not arranged in a segment belonging to one of the slots, the receiving process of the segment belonging to the one slot can be performed based on a DMRS arranged in a segment belonging to the other of the slots.

### <Modification Example>

In a modification example of the first aspect, the DMRS configuration for multi-segment transmission may be maintained similar to the DMRS configuration for single segment transmission in a case that a certain condition is satisfied. In other words, in the case that a certain condition is satisfied, the DMRS configuration may be controlled not in units of segment, but in units of one transmission occasion (entire one PUSCH).

The certain condition may be at least one of the followings:
(1) A DMRS is arranged in each of the first and second segments belonging to different slots, and
(2) The UE does not expect (assume) that a PUSCH is scheduled or configured such that the second segment does not include a DMRS.

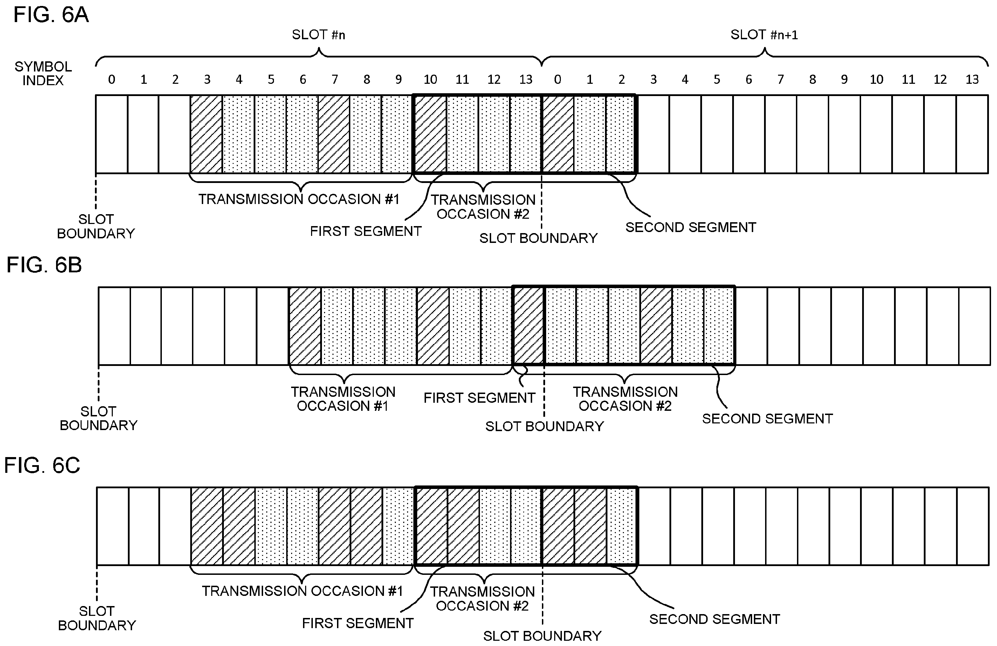

FIGS. 6A to 6C are diagrams to show examples of the DMRS configuration for multi-segment transmission according to the modification example of the first aspect. FIGS. 6A and 6B are different from FIG. 5A in that, at PUSCH transmission occasion #2, a single symbol DMRS is arranged not only in the first segment belonging to slot #n but also in the second segment belonging to slot #n + 1.

FIG. 6C is different from FIG. 5B in that, at PUSCH transmission occasion #2, a double symbol DMRS is arranged not only in the first segment belonging to slot #n but also in the second segment belonging to slot #n + 1.

As shown in FIGS. 6A to 6C, in the case that a DMRS is arranged in both the first and second segments belonging to different slots #n and #n + 1, the UE may assume that the multi-segment transmission of PUSCH at transmission occasion #2 is permitted (or may transmit the PUSCH at transmission occasion #2). Note that in the present embodiment, the terms "assume," "determine," and "expect" may be interpreted with each other.

On the other hand, in a case that a DMRS is arranged in neither the first nor second segment belonging to different slots #n and #n + 1, the UE may assume an error case to drop (cancel) the transmission of the PUSCH at transmission occasion #2.

Note that a base station may control the time domain resource allocation or DMRS configuration for the PUSCH such that a DMRS is included in each of segments belonging to different slots.

In the case that the frequency hopping is applied to the PUSCH, a DMRS may be assumed to be arranged in each hop. In a case that a specific hop crosses different slots, the UE may assume that a DMRS is arranged per segment (slot) of the specific hop. On the other hand, in a case that a DMRS is not arranged per segment of the specific hop, the UE may assume an error case to cancel the multi-segment transmission of the PUSCH.

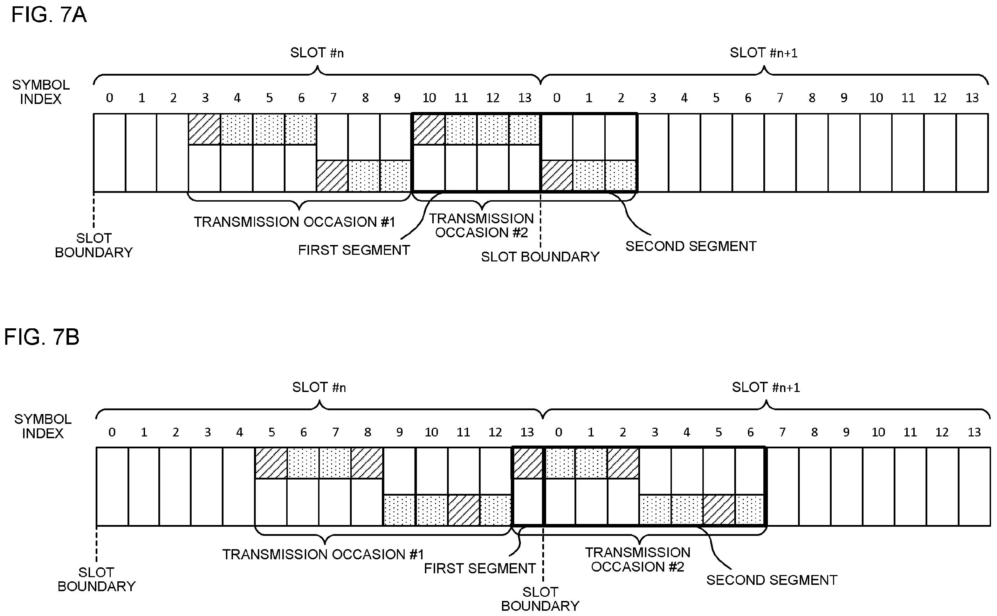

FIGS. 7A and 7B are diagrams to show other examples of the DMRS configuration for multi-segment transmission according to the modification example of the first aspect. As shown in FIGS. 7A and 7B, in a case that the frequency hopping is applied to a PUSCH at each transmission occasion, at least one DMRS may be arranged per hop.

FIG. 7A shows the example in which a hopping boundary at transmission occasion #2 matches a slot boundary between slot #n + 1 and slot #n. As shown in FIG. 7A, each hop of PUSCH at transmission occasion #2 matches each segment, one DMRS may be arranged per hop (in other words, per segment).

On the other hand, FIG. 7B shows the example in which a hopping boundary at transmission occasion #2 does not match a slot boundary between slot #n + 1 and slot #n. As shown in FIG. 7B, in a case that a specific hop (here, a first hop) at transmission occasion #2 crosses a plurality of slots, a DMRS may be assumed to be arranged per segment of the specific hop.

For example, in FIG. 7B, the first hop at transmission occasion #2 corresponds to symbol #13 in slot #n belonging to the first segment and symbols #0 to #2 in slot #n + 1 belonging to the second segment. For this reason, a DMRS is arranged in each of symbol #13 belonging to the first segment and symbol #2 belonging to the second segment within the first hop.

In this way, in the case that the frequency hopping is applied to a PUSCH, the base station may arrange a DMRS in at least one symbol of each hop. In a case that a specific hop crosses a plurality of slots, the base station may arrange a DMRS in at least one symbol in each segment of the specific hop.

In the first aspect described above, the DMRS configuration in the multi-segment transmission (for example, see transmission occasion #2 in FIGS. 5A, 5B, 6A to 6C, 7A, and 7B) is maintained to be the same as the DMRS configuration in the single segment transmission (for example, see transmission occasion #1 in FIGS. 5A, 5B, 6A to 6C, 7A, and 7B). Accordingly, regardless of whether multi-segment transmission or single segment transmission is performed, the same DMRS configuration can be used, and thus, the determination of the DMRS arrangement in the UE can be easily made.

### (Second Aspect)

In a second aspect, in the case of multi-segment transmission, the DMRS configuration is controlled per segment. The DMRS configuration for each segment within a certain transmission occasion may be defined or configured differently between a plurality of segments within the certain transmission occasion, or may be defined or configured in common between the plurality of segments.

Note that in the present embodiment, the term "define" may mean being predefined in a specification. The term "configure" may mean performing a certain control based on information notified to the UE by the higher layer parameter.

The higher layer parameter is, for example, at least one of information conveyed on a broadcast channel (for example, master information block (MIB)), system information (for example, system information block (SIB)), and the RRC parameter (RRC IE).

In the second aspect, in a case that a single PUSCH (a PUSCH at a transmission occasion or PUSCH in a repetition) includes a plurality of segments belonging to different slots, the DMRS configuration is defined or configured for the UE per segment. In other words, the DMRS configuration may be applied to each segment as if each segment is an independent PUSCH.

In the second aspect, the interpolation of the channel estimation between the segments belonging to different slots may not be permitted, or may be permitted. The same transmit power is ensured between the segments belonging to different slots, or the transmit powers for the respective segments may be differently controlled. The phase continuity may not be ensured or may be ensured for different slots to which the first and second segments belong.

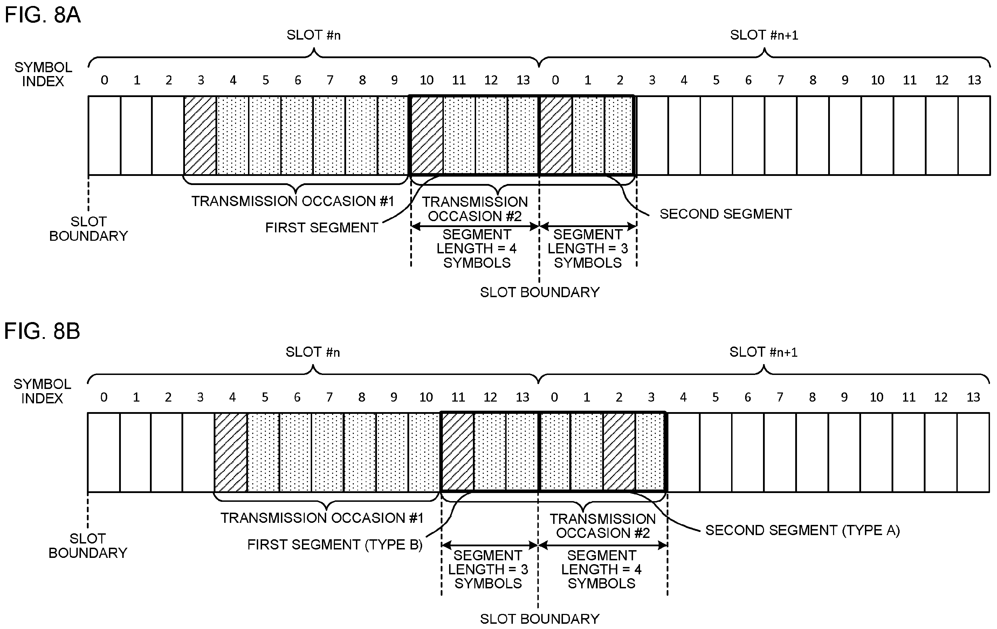

As the DMRS configuration per segment, for example, at least one of the number of consecutive DMRS symbols, the presence or absence of the additional DMRS symbol, and the DMRS type may be defined or configured in common or differently between the segments. FIGS. 8A, 8B, 9 and 10A to 10C are diagrams to show examples of the DMRS configuration for multi-segment transmission according to the second aspect.

### <DMRS Type>

The DMRS type for at least one of the frequency domain and the code domain (for example, type 1 or type 2 described above) may be defined or configured in common between the segments, or may be defined or configured differently per segment.

The DMRS type for the time domain (for example, type A or type B described above) may be defined or configured in common between the segments, or may be defined or configured differently per segment.

For example, only a specific type (for example, type B described above) may be permitted for each segment (for example, FIG. 8A).

Alternatively, one type (for example, type B) may be permitted for one segment (for example, the first segment), and another type (for example, type A) may be permitted for the other segment (for example, the second segment) (for example, FIG. 8B). Note that such another type may be permitted for the other segment in a case that a segment length the other segment is equal to or greater than a certain threshold (for example, three or two symbols).

### <The Number of Consecutive DMRS Symbols>

The UE may determine the number of consecutive DMRS symbols in each segment (for example, the initial DMRS symbol) (for example, whether the single symbol DMRS or the double symbol DMRS) regardless of or based on each segment length. Note that the initial DMRS symbol may be referred to as a front-loaded DMRS symbol or the like.

For example, the UE may determine the single symbol DMRS (or the double symbol DMRS) regardless of the segment length (for the all segment lengths). In this case, the UE may determine either the single symbol DMRS or the double symbol DMRS, based on the higher layer parameter.

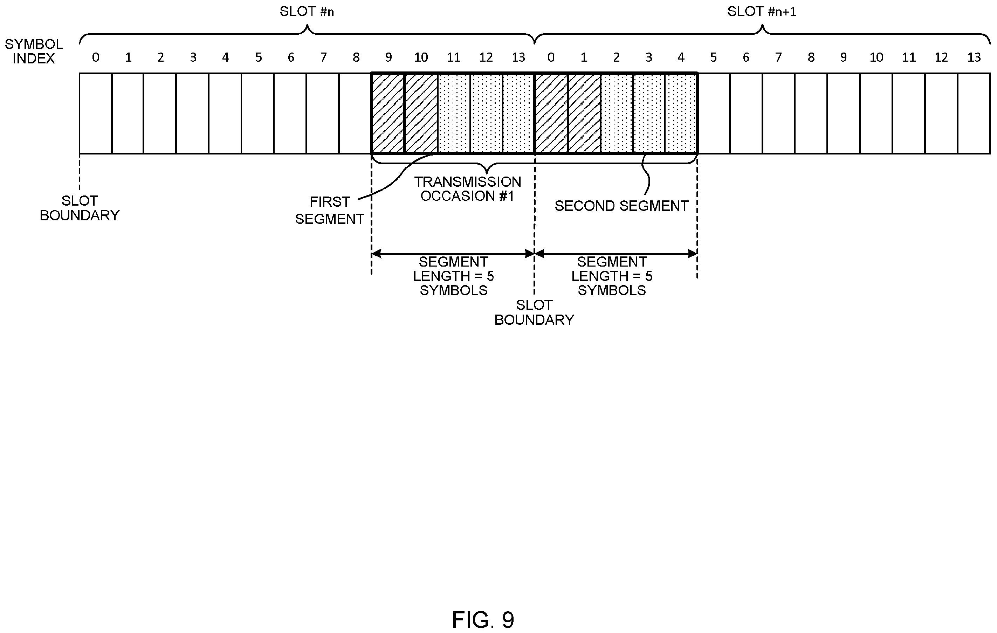

In a case that the segment length is equal to or greater than a certain threshold (for example, 5 or 4), the UE may determine the double symbol DMRS for the segment having the segment length (for example, FIG. 9). On the other hand, in a case that the segment length is equal to or smaller than a certain threshold (for example, 5 or 4), the UE may determine the single symbol DMRS for the segment having the segment length.

### <Presence or Absence of Additional DMRS Symbol>

The UE may determine whether an additional DMRS symbol is present or not within each segment, regardless of or based on the segment length.

For example, the UE may assume that an additional DMRS symbol is not present within each segment regardless of the segment length (for the all segment lengths).

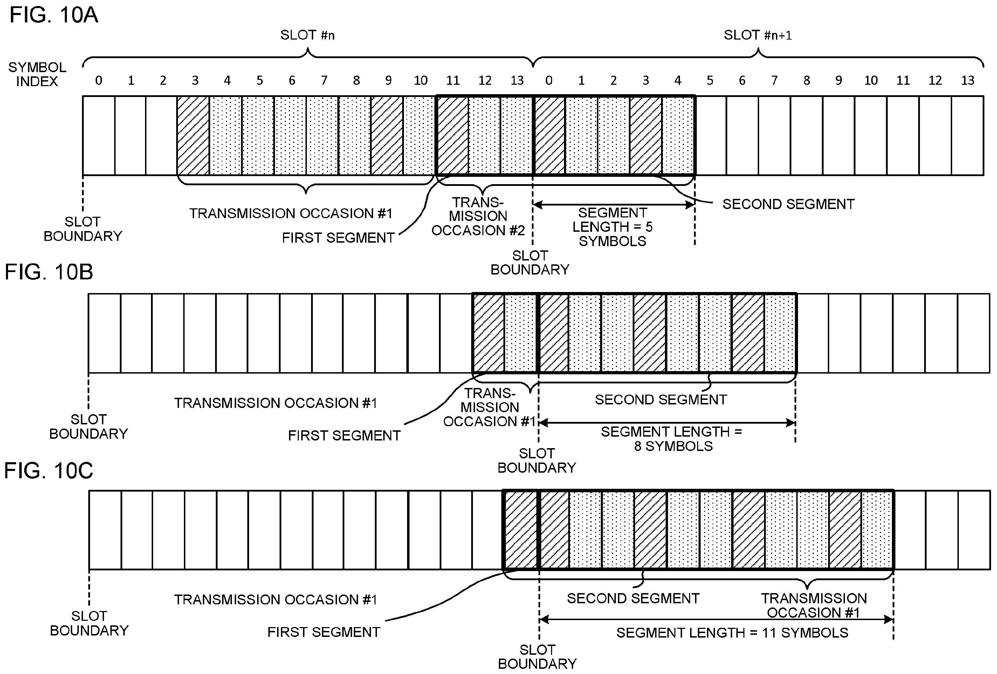

In a case that the segment length is equal to or smaller than a first threshold (for example, 5 or 4), the UE may assume that an additional DMRS symbol is not present within the segment having the segment length (for example, see the first segment in FIGS. 10A and 10B).

On the other hand, in the case that the segment length is equal to or greater than the first threshold (for example, 5 or 4), the UE may assume that one additional DMRS symbol (or one additional double symbol DMRS) is present within the segment having the segment length (for example, see the second segment in FIG. 10A).

In a case that the segment length is equal to or greater than a second threshold (for example, 8 or 7), the UE may assume that two additional DMRS symbols (or two additional double symbol DMRSs) are present within the segment having the segment length (for example, see the second segment in FIG. 10B).

In a case that the segment length is equal to or greater than a third threshold (for example, 10 or 9), the UE may assume that three additional DMRS symbols (or three additional double symbol DMRSs) are present within the segment having the segment length (for example, see the second segment in FIG. 10C).

### <Segment without Configuration or Indication>

The UE may handle the segment that is not provided with a configuration or an indication for the DMRS in accordance with any of the followings (1) to (3).
(1) The UE may share, for the segment without a configuration or an indication, the DMRS for the receiving process (for example, at least one of channel estimation and decoding) in another segment.

Alternatively, (2) the UE may comply with a specific DMRS configuration for the segment without a configuration or an indication. The specific DMRS configuration may be defined by a specification, or may be configured as a default DMRS configuration through the higher layer parameter. The specific DMRS configuration may be, for example, at least one combination of type 1 described above, type B described above, three additional DMRS symbols, and a single symbol DMRS.

Alternatively, (3) the UE may consider that the segment is an error case to cancel reception of PUSCH in the segment, or reception of PUSCH at the all transmission occasions including the segment.

### <Specific Segment Length>

A certain DMRS configuration may be defined or configured for a segment having a specific segment length. In other words, a DMRS configuration for single segment transmission may not be applied to the segment.

For example, a specific DMRS configuration for the segment having the specific segment length (for example, 2, 3, or 4 symbols) may be defined by a specification, or configured for the UE through the higher layer parameter. The specific DMRS configuration may be, for example, at least one combination of type 1 described above, type B described above, one additional DMRS symbol, and a single symbol DMRS.

The UE may handle a segment of one symbol (for example, the first segment in FIG. 10C) in accordance with any of the followings (1) to (3).
(1) The UE drops (cancel) PUSCH transmission in the segment of one symbol.

Alternatively, (2) the UE may perform PUSCH transmission without a DMRS in the segment of the one symbol. In this case, a DMRS transmitted in another segment (for example, a segment longer than one symbol) may be used to perform the receiving process of the PUSCH in the segment of the one symbol.

Alternatively, (3) the UE may transmit a DMRS without or with a PUSCH in the segment of the one symbol. For example, in a case that a waveform of the PUSCH is DFT spread OFDM (or in a case that transform precoding is applied), the UE may transmit only the DMRS in the one symbol. On the other hand, in a case that a waveform of the PUSCH is CP-OFDM (or in a case that transform precoding is not applied), the UE may frequency-division multiplex the DMRS and the PUSCH in the one symbol to transmit the resultant.

In the second aspect described above, the DMRS configuration in the multi-segment transmission is controlled in units of segment. For this reason, restrictions on the interpolation of the channel estimation, the phase continuity and the like between the segments (slots) in the case of performing the multi-segment transmission can be reduced.

### <Other Aspects>

In other aspects, although the first and second aspects describe mainly the case of the number N of repetitions of N > 1, the DMRS configuration for multi-segment transmission described in the first and second aspects can be applied also in a case of the number N of repetitions of N = 1 (in other words, one time transmission).

The PUSCH repetition may be interpreted with "a plurality of PUSCHs for each of a plurality of time units (for example, a plurality of slots, sub-slots, or mini-slots)," "PUSCH blind retransmission," "multi-slot PUSCH," "multi-sub-slot PUSCH," "multi-mini-slot PUSCH," "a plurality of PUSCHs including the same TB", and the like.

The multi-segment transmission of PUSCH may be referred to as "one PUSCH crossing a plurality of slots," "one PUSCH crossing a slot boundary," "a plurality of PUSCHs over a plurality of slots", "a plurality of PUSCHs crossing a slot boundary", and the like.

The above-described first and second aspects describe the DMRS configuration of PUSCH subjected to multi-segment transmission is described, buy can apply to the DMRS configuration of the PDSCH subjected to multi-segment transmission.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

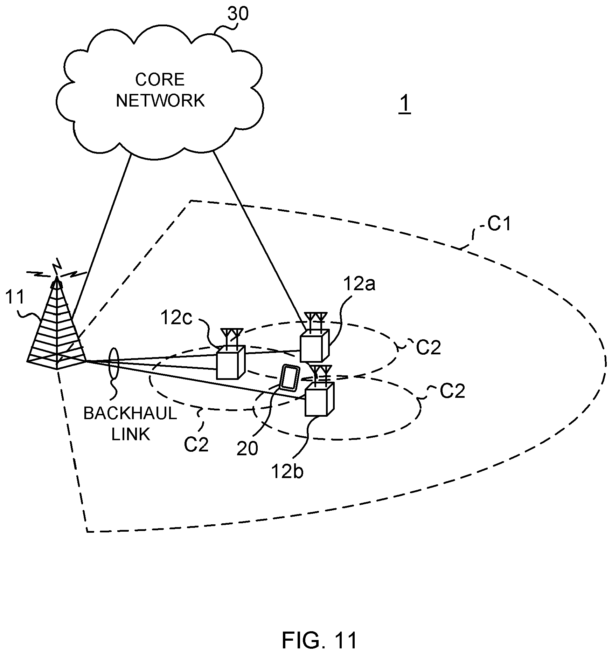

FIG. 11 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

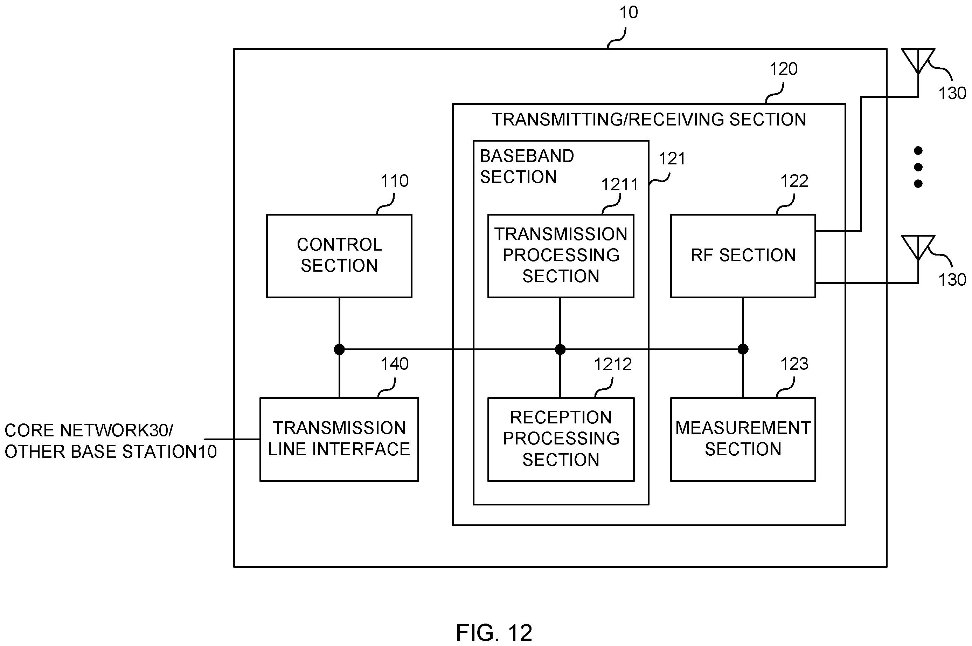

FIG. 12 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply a receiving process such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may receive an uplink shared channel at a certain transmission occasion. The transmitting/receiving section 120 may receive an uplink shared channel at a certain transmission occasion over a plurality of consecutive slots.

The transmitting/receiving section 120 may transmit a downlink shared channel at a certain transmission occasion. The transmitting/receiving section 120 may transmit a downlink shared channel at a certain transmission occasion over a plurality of consecutive slots.

The control section 110 may control a configuration of a demodulation reference signal for the downlink shared channel or the uplink shared channel.

The control section 110 may control the configuration of the demodulation reference signal in units of the certain transmission occasion (the first aspect).

Specifically, in a case that a symbol for the demodulation reference signal is provided to each of the plurality of slots, the control section 110 may control the configuration of the demodulation reference signal in units of the certain transmission occasion.

In a case that frequency hopping is applied to the downlink shared channel and a specific hop crosses the plurality of slots, the control section 110 may provide the symbol for the demodulation reference signal to each of the plurality of slots of the specific hop.

The control section 110 may control the configuration of the demodulation reference signal in common or differently between segments belonging to the plurality of slots within the certain transmission occasion.

The control section 110 may control a receiving process (for example, demodulation, decode, or the like) of the uplink shared channel at the certain transmission occasion over the plurality of slots, based on the demodulation reference signal of which configuration is controlled as described above.

### (User Terminal)

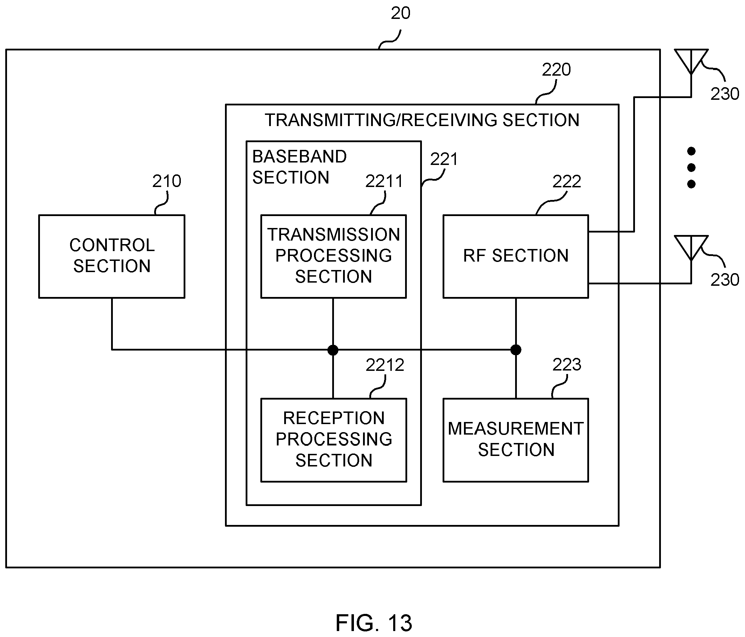

FIG. 13 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the communication path interface 240.

Note that the transmitting/receiving section 220 may transmit an uplink shared channel at a certain transmission occasion. The transmitting/receiving section 220 may transmit an uplink shared channel at a certain transmission occasion over a plurality of consecutive slots.

The transmitting/receiving section 220 may receive a downlink shared channel at a certain transmission occasion. The transmitting/receiving section 220 may receive a downlink shared channel at a certain transmission occasion over a plurality of consecutive slots.

The control section 210 may control a configuration of a demodulation reference signal for the uplink shared channel or the downlink shared channel.

The control section 210 may control the configuration of the demodulation reference signal in units of the certain transmission occasion (the first aspect).

Specifically, in a case that a symbol for the demodulation reference signal is provided to each of the plurality of slots, the control section 210 may control the configuration of the demodulation reference signal in units of the certain transmission occasion.

In a case that frequency hopping is applied to the uplink shared channel and a specific hop crosses the plurality of slots, the control section 210 may assume that the symbol for the demodulation reference signal is provided to each of the plurality of slots of the specific hop.

The control section 210 may control the configuration of the demodulation reference signal in common or differently between segments belonging to the plurality of slots within the certain transmission occasion.

The control section 110 may control a receiving process (for example, demodulation, decode, or the like) of the downlink shared channel at the certain transmission occasion over the plurality of slots, based on the demodulation reference signal of which configuration is controlled as described above.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

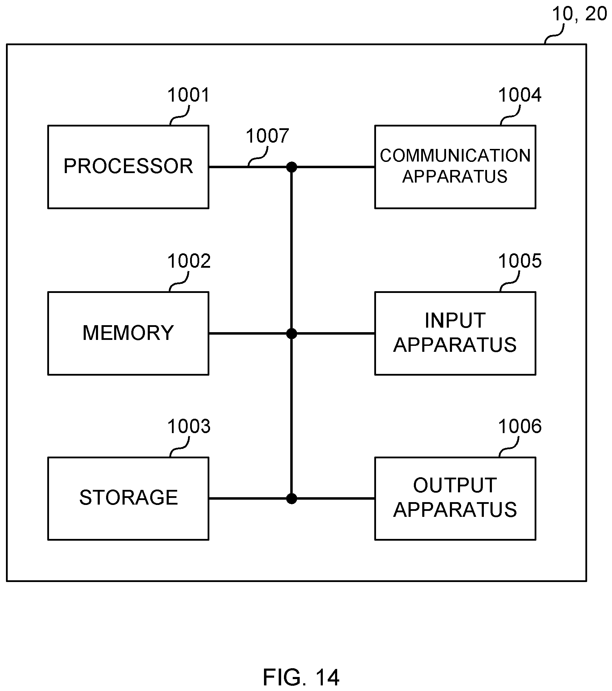

For example, a base station, a user terminal, and so on according to one embodiment of the present disclosure may function as a computer that executes the processes of the radio communication method of the present disclosure. FIG. 14 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the scope of the invention defined by the recitations of claims. Consequently, the description of the present disclosure is provided only for the purpose of explaining examples, and should by no means be construed to limit the invention according to the present disclosure in any way.

## Claims

1. A terminal (20) comprising:
a transmitting section (220) that performs a repetition transmission of an uplink shared channel by using a plurality of consecutive symbols over a first slot and a second slot which is contiguous to the first slot; and
a control section (210) that controls a transmission of a demodulation reference signal separately for a first segment included in the first slot among the plurality of consecutive symbols and for a second segment included in the second slot among the plurality of consecutive symbols, and that
controls to use same transmit power for transmission of the first segment and the second segment, and
when at least one of the first segment and the second segment is one symbol, and that controls not to perform a transmission of the uplink shared channel in the at least one segment of one symbol.

2. The terminal (20) according to claim 1, wherein the control section (210) controls, based on a number of symbols of the first segment, a number of demodulation reference signals transmitted in the first segment and controls, based on a number of symbols of the second segment, a number of demodulation reference signals transmitted in the second segment.

3. A radio communication method for a terminal (20), comprising:
performing a repetition transmission of an uplink shared channel by using a plurality of consecutive symbols over a first slot and a second slot which is contiguous to the first slot;
controlling a transmission of a demodulation reference signal separately for a first segment included in the first slot among the plurality of consecutive symbols and for a second segment included in the second slot among the plurality of consecutive symbols,
controlling to use same transmit power for transmission of the first segment and the second segment, and
when at least one of the first segment and the second segment is one symbol, controlling not to perform a transmission of the uplink shared channel in the at least one segment of one symbol.

4. A system comprising a terminal (20) according to claim 1 or 2 and a base station, wherein
the base station (10) comprises:
a receiving section (120) that receives the repetition transmission of the uplink shared channel.

## Patentansprüche

1. Endgerät (20), umfassend:
einen Sendeabschnitt (220), der eine Wiederholungsübertragung eines gemeinsam genutzten Aufwärtsverbindungskanals unter Verwendung einer Vielzahl aufeinanderfolgender Symbole über einen ersten Slot und einen zweiten Slot, der an den ersten Slot angrenzt, durchführt; und
einen Steuerabschnitt (210), der eine Übertragung eines Demodulationsreferenzsignals getrennt für ein erstes Segment der Vielzahl aufeinanderfolgender Symbole, das in dem ersten Slot enthalten ist, und für ein zweites Segment der Vielzahl aufeinanderfolgender Symbole, das in dem zweiten Slot enthalten ist, steuert und der
steuert, dieselbe Sendeleistung für die Übertragung des ersten Segments und des zweiten Segments zu verwenden, und
wenn mindestens eines von dem ersten Segment und dem zweiten Segment ein Symbol ist, steuert, dass in dem mindestens einen Segment von einem Symbol die Übertragung des gemeinsam genutzten Aufwärtsverbindungskanals nicht durchgeführt wird.

2. Endgerät (20) nach Anspruch 1, wobei der Steuerabschnitt (210) auf der Grundlage einer Anzahl von Symbolen des ersten Segments eine Anzahl von in dem ersten Segment übertragenen Demodulationsreferenzsignalen steuert und auf der Grundlage einer Anzahl von Symbolen des zweiten Segments eine Anzahl von in dem zweiten Segment übertragenen Demodulationsreferenzsignalen steuert.

3. Funkkommunikationsverfahren für ein Endgerät (20), umfassend:
Durchführen einer Wiederholungsübertragung eines gemeinsam genutzten Aufwärtsverbindungskanals unter Verwendung einer Vielzahl aufeinanderfolgender Symbole über einen ersten Slot und einen zweiten Slot, der an den ersten Slot angrenzt;
Steuern einer Übertragung eines Demodulationsreferenzsignals getrennt für ein erstes Segment der Vielzahl aufeinanderfolgender Symbole, das in dem ersten Slot enthalten ist, und für ein zweites Segment der Vielzahl aufeinanderfolgender Symbole, das in dem zweiten Slot enthalten ist,
Steuern, dieselbe Sendeleistung für die Übertragung des ersten Segments und des zweiten Segments zu verwenden, und
wenn mindestens eines von dem ersten Segment und dem zweiten Segment ein Symbol ist,
Steuern, dass in dem mindestens einen Segment von einem Symbol die Übertragung des gemeinsam genutzten Aufwärtsverbindungskanals nicht durchgeführt wird.

4. System, das ein Endgerät (20) nach Anspruch 1 oder 2 und eine Basisstation umfasst, wobei
die Basisstation (10) Folgendes umfasst:
einen Empfangsabschnitt (120), der die Wiederholungsübertragung des gemeinsam genutzten Aufwärtsverbindungskanals empfängt.

## Revendications

1. Terminal (20) comprenant :
une section de transmission (220) qui effectue une transmission par répétition d'un canal partagé de liaison montante en utilisant une pluralité de symboles consécutifs sur un premier créneau et un deuxième créneau qui est contigu au premier créneau ; et
une section de commande (210) qui commande une transmission d'un signal de référence de démodulation séparément pour un premier segment inclus dans le premier créneau parmi la pluralité de symboles consécutifs et pour un deuxième segment inclus dans le deuxième créneau parmi la pluralité de symboles consécutifs, et qui
commande d'utiliser la même puissance de transmission pour la transmission du premier segment et du deuxième segment, et
lorsqu'au moins un parmi le premier segment et le deuxième segment est un symbole, qui commande de ne pas effectuer une transmission du canal partagé de liaison montante dans ledit au moins un segment d'un symbole.

2. Terminal (20) selon la revendication 1, dans lequel la section de commande (210) commande, sur la base d'un nombre de symboles du premier segment, un nombre de signaux de référence de démodulation transmis dans le premier segment et commande, sur la base d'un nombre de symboles du deuxième segment, un nombre de signaux de référence de démodulation transmis dans le deuxième segment.

3. Procédé de communication radio pour un terminal (20), consistant à :
effectuer une transmission par répétition d'un canal partagé de liaison montante en utilisant une pluralité de symboles consécutifs sur un premier créneau et un deuxième créneau qui est contigu au premier créneau ;
commander une transmission d'un signal de référence de démodulation séparément pour un premier segment inclus dans le premier créneau parmi la pluralité de symboles consécutifs et pour un deuxième segment inclus dans le deuxième créneau parmi la pluralité de symboles consécutifs,
commander d'utiliser la même puissance de transmission pour la transmission du premier segment et du deuxième segment, et
lorsqu'au moins un parmi le premier segment et le deuxième segment est un symbole,
commander de ne pas effectuer une transmission du canal partagé de liaison montante dans ledit au moins un segment d'un symbole.

4. Système comprenant un terminal (20) selon la revendication 1 ou la revendication 2 et une station de base, dans lequel
la station de base (10) comprend :
une section de réception (120) qui reçoit la transmission par répétition du canal partagé de liaison montante.
